# EUROPEAN PATENT APPLICATION

(11) **EP 3 267 599 A1**
(43) Date of publication of application: **10.01.2018**
(21) Application number: 17180023.8
(22) Date of filing: 06.07.2017
(51) Int. Cl.: H04B 10/116, G06Q 30/06, G06Q 50/12

(54) **METHOD AND SYSTEM FOR REMOTE ORDER SUBMISSION VIA A LIGHT IDENTIFIER**

(30) Priority: 06.07.2016 US 201662358964 P
(71) Applicant: Panasonic Intellectual Property Management Co., Ltd., Osaka-shi, Osaka 540-6207 (JP)
(72) Inventor: LI, Eugene, Osaka, 571-8501 (JP); ZHANG, Ren, Osaka, 571-8501 (JP); ZHANG, George, Osaka, 571-8501 (JP); AKINRELE, Oliver, Osaka, 571-8501 (JP)
(74) Representative: Eisenführ Speiser

(57) **Abstract**

A system and method for delivering a remote order is provided. The system includes a light transmitter and a server. The server transmits, to an ordering device, a light-ID. The ordering device receives the light-ID, and upon selection of a remote order, transmits the remote order and the light-ID received to the server. The server receives, from the ordering device via a network, the remote order and the light-ID, assigns an order-ID to the remote order received, and outputs order information including at least the order-ID and a designated location of a store premise associated with the light-ID.

## Description

### BACKGROUND

### 1. Field of the Disclosure

The present disclosure relates to the field of remote orders. More particularly, the present disclosure relates to picking up items ordered remotely at a store by a drive through.

### 2. Background Information

In a fast-paced society with increasing demand for dine out options and quicker order fulfillment, more efficient methods of delivering consumer demand is sought. Further, ownership of smart phones or mobile devices with computing and imaging capabilities are becoming more common place and used in procurement of services or merchandize.

### BRIEF DESCRIPTION OF THE DRAWINGS

Fig. 1 shows an exemplary general computer system that includes a set of instructions for remote order system using parking spaces according to an aspect of the present disclosure.
Fig. 2 shows an exemplary schematic of a remote order system using light identifications (light-IDs), according to an aspect of the present disclosure.
Fig. 3 shows an exemplary schematic of a mobile device, according to an aspect of the present disclosure.
Fig. 4 shows an exemplary schematic of an internal system of a vehicle, according to an aspect of the present disclosure.
Fig. 5 shows an exemplary schematic of a backend system, according to an aspect of the present disclosure.
Fig. 6 shows an exemplary schematic of a Point of Sales (POS) system, according to an aspect of the present disclosure.
Fig. 7 shows an exemplary flowchart of a remote order process using light-IDs, according to an aspect of the present disclosure.
Fig. 8 shows an exemplary flowchart of a remote order process using light-IDs, according to an aspect of the present disclosure.
Fig. 9 shows an exemplary schematic of a remote order system in a restaurant environment using light-IDs, according to an aspect of the present disclosure.
Fig. 10 shows an exemplary schematic of a remote order system using light-IDs, according to an aspect of the present disclosure.
Fig. 11 shows an exemplary schematic of a stationary ordering device, according to an aspect of the present disclosure.
Fig. 12 shows an exemplary schematic of a backend system, according to an aspect of the present disclosure.
Fig. 13 shows an exemplary flowchart of a remote order process using light-IDs, according to an aspect of the present disclosure.
Fig. 14 shows an exemplary flowchart of a remote order process using light-IDs, according to an aspect of the present disclosure.
Fig. 15 shows a display of exemplary order information, according to an aspect of the present disclosure.
Fig. 16 shows an exemplary remote ordering process using light-IDs, according to an aspect of the present disclosure.
Fig. 17 shows an exemplary schematic of a light ID management system with backend systems, according to an aspect of the present disclosure.
Fig. 18 shows an exemplary flowchart of a remote order system using light-IDs, according to an aspect of the present disclosure.

### DETAILED DESCRIPTION

In view of the foregoing, the present disclosure, through one or more of its various aspects, embodiments and/or specific features or sub-components, is thus intended to bring out one or more of the advantages as specifically noted below. U.S. Publication Nos. 2013/0330088 and 2014/0232903 are herein incorporated by reference in its entirety.

Methods described herein are non-limiting illustrative examples, and as such are not intended to require or imply that any particular process of any embodiment be performed in the order presented. Words such as "thereafter," "then," "next," etc. are not intended to limit the order of the processes, and these words are instead used to guide the reader through the description of the methods. Further, any reference to claim elements in the singular, for example, using the articles "a," "an" or "the", is not to be construed as limiting the element to the singular.

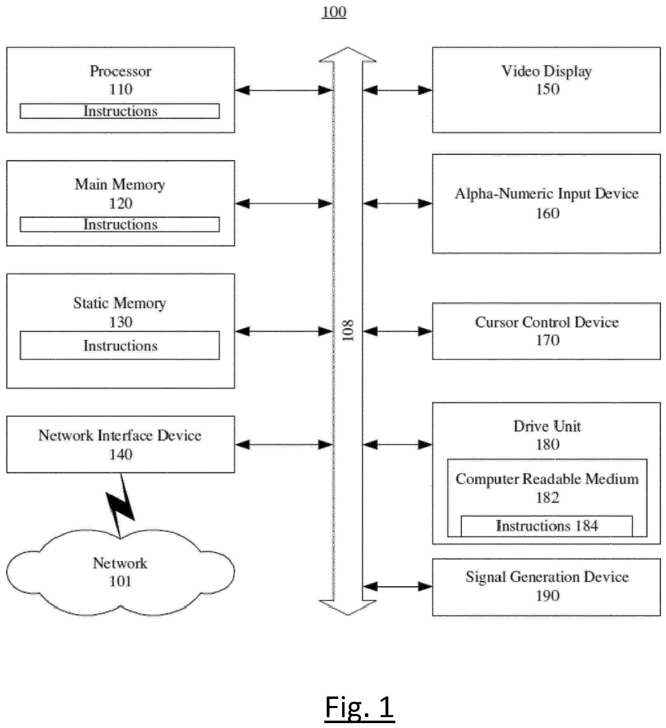

Fig. 1 is an illustrative embodiment of a general computer system, on which a method for receiving a remote order from an ordering device, which may include a stationary ordering device or a mobile device, and delivering the remote order to a customer, and which is shown and is designated 100. The computer system 100 can include a set of instructions that can be executed to cause the computer system 100 to perform any one or more of the methods or computer based functions disclosed herein. The computer system 100 may operate as a standalone device or may be connected, for example, using a network 101, to other computer systems, server systems, storage systems, or peripheral devices.

In a networked deployment, the computer system 100 may operate in the capacity of a server or as a client user computer in a server-client user network environment, or as a peer computer system in a peer-to-peer (or distributed) network environment. The computer system 100 can also be implemented as or incorporated into various devices, such as a stationary computer, a mobile computer, a personal computer (PC), a laptop computer, a tablet computer, a wireless smart phone, a set-top box (STB), a personal digital assistant (PDA), a global positioning satellite (GPS) device, a communications device, a control system, a server, a video server, a camera, bullet camera, dome camera, covert camera, discreet camera, infrared camera, night vision camera, power on Ethernet (PoE) camera, outdoor camera, day/night camera, varifocal camera, network camera, IP camera, wireless camera, PTZ camera, speed dome camera, high-definition camera, CCTV camera, a web appliance, a network router, switch or bridge, or any other machine capable of executing a set of instructions (sequential or otherwise) that specify actions to be taken by that machine. The computer system 100 can be incorporated as or in a particular device that in turn is in an integrated system that includes additional devices. In a particular embodiment, the computer system 100 can be implemented using electronic devices that provide voice, video or data communication. Further, while a single computer system 100 is illustrated, the term "system" shall also be taken to include any collection of systems or sub-systems that individually or jointly execute a set, or multiple sets, of instructions to perform one or more computer functions.

As illustrated in Fig. 1, the computer system 100 includes a processor 110. A processor for a computer system 100 is tangible and non-transitory. As used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. A processor is an article of manufacture and/or a machine component. A processor for a computer system 100 is configured to execute software instructions in order to perform functions as described in the various embodiments herein. A processor for a computer system 100 may be a general purpose processor or may be part of an application specific integrated circuit (ASIC). A processor for a computer system 100 may also be a microprocessor, a microcomputer, a processor chip, a controller, a microcontroller, a digital signal processor (DSP), a state machine, or a programmable logic device. A processor for a computer system 100 may also be a logical circuit, including a programmable gate array (PGA) such as a field programmable gate array (FPGA), or another type of circuit that includes discrete gate and/or transistor logic. A processor for a computer system 100 may be a central processing unit (CPU), a graphics processing unit (GPU), or both. Additionally, any processor described herein may include multiple processors, parallel processors, or both. Multiple processors may be included in, or coupled to, a single device or multiple devices.

Moreover, the computer system 100 includes a main memory 120 and a static memory 130 that can communicate with each other via a bus 108. Memories described herein are tangible storage mediums that can store data and executable instructions, and are non-transitory during the time instructions are stored therein. As used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. A memory describe herein is an article of manufacture and/or machine component. Memories described herein are computer-readable mediums from which data and executable instructions can be read by a computer. Memories as described herein may be random access memory (RAM), read only memory (ROM), flash memory, electrically programmable read only memory (EPROM), electrically erasable programmable read-only memory (EEPROM), registers, a hard disk, a removable disk, tape, compact disk read only memory (CD-ROM), digital versatile disk (DVD), floppy disk, blu-ray disk, or any other form of storage medium known in the art. Memories may be volatile or non-volatile, secure and/or encrypted, unsecure and/or unencrypted.

As shown, the computer system 100 may further include a video display unit 150, such as a liquid crystal display (LCD), an organic light emitting diode (OLED), a flat panel display, a solid state display, or a cathode ray tube (CRT). Additionally, the computer system 100 may include an input device 160, such as a keyboard/virtual keyboard or touch-sensitive input screen or speech input with speech recognition, and a cursor control device 170, such as a mouse or touch-sensitive input screen or pad. The computer system 100 can also include a disk drive unit 180, a signal generation device 190, such as a speaker or remote control, and a network interface device 140.

In a particular embodiment, as depicted in Fig. 1, the disk drive unit 180 may include a computer-readable medium 182 in which one or more sets of instructions 184, e.g. software, can be embedded. Sets of instructions 184 can be read from the computer-readable medium 182. Further, the instructions 184, when executed by a processor, can be used to perform one or more of the methods and processes as described herein. In a particular embodiment, the instructions 184 may reside completely, or at least partially, within the main memory 120, the static memory 130, and/or within the processor 110 during execution by the computer system 100.

In an alternative embodiment, dedicated hardware implementations, such as application-specific integrated circuits (ASICs), programmable logic arrays and other hardware components, can be constructed to implement one or more of the methods described herein. One or more embodiments described herein may implement functions using two or more specific interconnected hardware modules or devices with related control and data signals that can be communicated between and through the modules. Accordingly, the present disclosure encompasses software, firmware, and hardware implementations. Nothing in the present application should be interpreted as being implemented or implementable solely with software and not hardware such as a tangible non-transitory processor and/or memory.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing can be constructed to implement one or more of the methods or functionality as described herein, and a processor described herein may be used to support a virtual processing environment.

The present disclosure contemplates a computer-readable medium 182 that includes instructions 184 or receives and executes instructions 184 responsive to a propagated signal; so that a device connected to a network 101 can communicate voice, video or data over the network 101. Further, the instructions 184 may be transmitted or received over the network 101 via the network interface device 140.

An aspect of the present disclosure is to read, receive or detect a light-ID transmitted from a light source by flashing or blinking via cameras imaging sensor such as a CCD or CMOS.

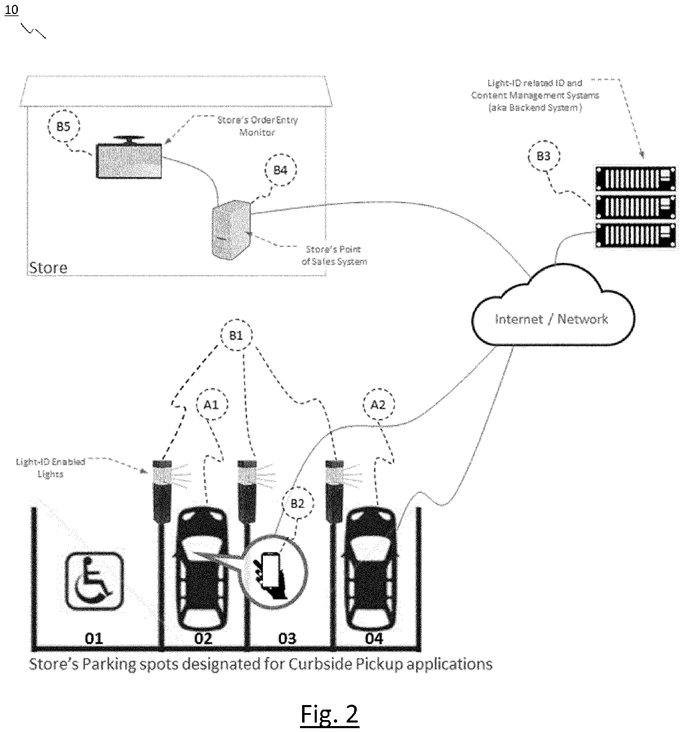

Fig. 2 is an exemplary schematic of a remote order system using light-IDs, according to an aspect of the present disclosure.

A remote order system 10 includes, without limitation, light fixtures B1, a mobile device B2 as an ordering device, a backend system B3, and Point of Sales (POS) system B4 and an order entry monitor B5. Portions of the remote order system 10 may be positioned at various locations of a store's property (e.g., within store itself, its parking lot, and etc.) The light fixtures B1 located at a store's parking lots include a light source that performs a visible light communication, described by US Publication No. 2013/0330088 which is herein incorporated by reference. More specifically, the light fixtures B1 can be configured to transmit light in a certain pattern or sequence. For example, light may be transmitted to be flashing or blinking in a particular pattern, frequency, or sequence to transmit a light identification (light ID), which may be assigned to the light fixtures B1. That is, each of the light fixtures B1 may be assigned to have a unique identification (ID) that is different from one another.

Further, each of the light fixtures B1 and corresponding light-ID may be linked with a particular location, such as one of parking spaces 01, 02, 03 and 04. The parking spaces 01, 02, 03 and 04 may be, without limitation, a store's parking spots designated for curbside pickup applications. In an example, a left light fixture B1 (i.e., positioned on a border between parking spaces 01 and 02) and a corresponding light ID may be linked with a parking space 02, a center light fixture B1 (i.e., positioned on a border between parking spaces 02 and 03) and a corresponding light ID may be linked with a parking space 03 and a right light fixture B1 (i.e., positioned on a border between parking spaces 03 and 04) and a corresponding light ID may be linked with a parking space 04. Those links or associations between the light fixtures B1 (and assigned light-IDs thereof) and parking spaces are stored in a memory of the backend system B3.

The mobile device B2 (e.g. a smart phone) operated by a customer in a vehicle A1 may include a camera having at least an image sensor. The camera may usually be used for taking a picture, but it may also be used as a light-ID receiver. However, aspects of the disclosure are not limited thereto, such that another component may be added to the mobile device to operate as the light-ID receiver. In an example, the camera may receive, with the image sensor, the light-ID transmitted by the left light fixture B1 when the mobile device B2 comes within a predetermined distance of the left light fixture B1 or is located at a predetermined place. Further, light ID transmitters, such as the light fixtures B1, may be configured to have a limited transmission range to be associated with an intended light ID transmitter when multiple light ID transmitters are present. Accordingly, when the mobile device B2 is located in an area where the image sensor receives light transmission from the left light fixture B1, the mobile device B2 may be able to read the light-ID.

Unlike print image codes (e.g., bar codes, QR codes, etc.), which may be an image that can be scanned to transmit or receive information, the light-ID transmission may be received when it is being transmitted by a light-ID transmitter having a limited transmission range. The print image codes, however, since can be captured as an image and used at another location, and thus, may be more susceptible for malicious use. Further, at least because print image codes may be easily replaced with another without detection, it may be difficult to determine a validity of such print image codes. For example, a malicious print image code may replace valid print image codes to receive potentially sensitive information when the malicious print image code is scanned. Accordingly, use of light-ID may provide improved security in transmitting an order.

In addition, unlike print image codes, the light-ID may be associated with a specific light transmitter and a physical location, such that a backend system receiving the remote order with the light-ID may be able to quickly identify a location of the ordering device to deliver the ordered item.

Further, the mobile device B2 may include a software application to detect the light-ID. If the customer runs the software application on the mobile device B2, the camera may be activated to read the light-ID. In addition, mobile device B2 may operate as an ordering device, such that the customer may input an order via the mobile device B2. The software application also may be activated when inputting the order. The inputted remote order may be transmitted by the mobile device B2, by a transmitter of the mobile device B2, together with the light-ID received by the camera to the backend system B3 via an internet/network (herein described as a network). More specifically, when the mobile device B2 transmits the inputted remote order, the received light-ID may be transmitted contemporaneously with the remote order. A service provider, in receipt of the light-ID with the remote order may be able to readily identify a location of the customer that placed the respective order. Although remote orders are described as being transmitted by a mobile device, aspects of the disclosure are not limited thereto, such that remote orders may be placed using a vehicle or a stationary device (e.g., a kiosk) equipped with an image sensor.

In addition, the unique light-ID assigned to a light-ID transmitter, such as a light fixture B1, may be reusable that may be used on multiple occasions or may have a limited use. For example, since the light-ID is associated with a physical area, the same light-ID may be used multiple times for placing remote orders. Alternatively, the light-ID may be a single use light-ID, such that once a remote order is transmitted or placed with a light-ID, a new light-ID may be transmitted by the light transmitter and corresponding databases may be updated to reflect the new light-ID.

Although mobile device B2 was described above as an ordering device, aspects of the disclosure are not limited thereto, such that other devices having cameras or light receivers and communication transmitters may also be used as an ordering device.

For example, the vehicle A2 positioned at parking space 04 may be used as an ordering device. More specifically, a customer in the vehicle A2 may place an order by using internal devices of the vehicle A2 similar to the mobile device B2. For example, the vehicle A2 may be equipped with monitoring cameras, which may be used to capture a front view, a side view or a rear view. Images or video took by the cameras may be displayed on an internal display corresponding to one of the internal devices in the vehicle A2. But the cameras also may receive a light-ID transmitted from the right light fixture B1. Thus, the vehicle A2 may be recognized as an ordering device in the remote order system 10 and one or more of the cameras of the vehicle A2 may be used as a light-ID receiver.

The backend system B3, by itself or through orchestration with other systems, may utilize the light-ID transmitted from the mobile device B2 or the vehicle A2 to identify a location of a user (e.g. a parking space where the customer is located) by referencing association information stored in a database of the backend system B3. More specifically, each light-ID may be associated with a particular location and transmitter, and such association information may be stored in a memory of the database of the backend system B3. The backend system B3, by itself or through orchestration with other systems, communicates with the POS system B4 to notify that the customer is located at one of the store's parking spaces.

The POS system B4 in the store receives the remote order transmitted from the backend system B3. In addition, the POS system B4 may receive a table stored in its memory. In an example, the table may define a relationship or association between a plurality of light fixtures and light IDs thereof. The store may be a restaurant, a fast food restaurant, a grocery store or a super market.

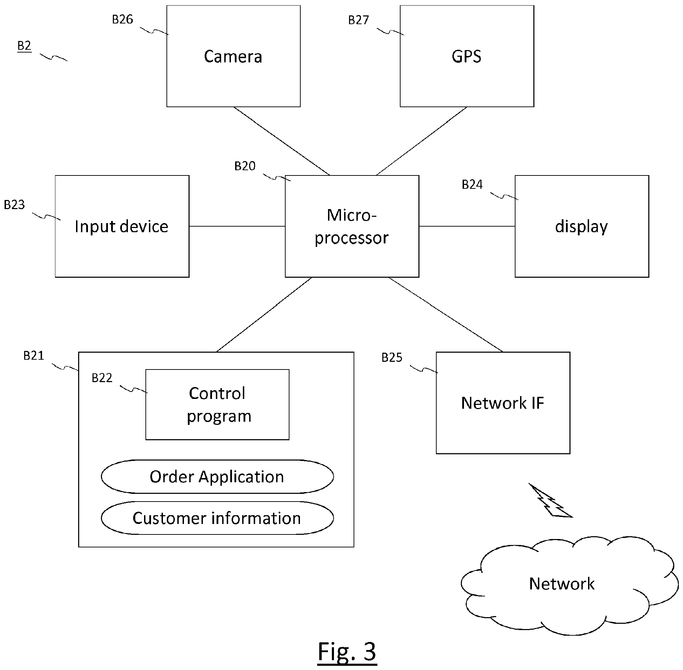

Fig. 3 is an exemplary schematic of a mobile device, according to an aspect of the present disclosure.

The mobile device B2 includes a microprocessor B20, a memory B21 storing a control program B22, an input device B23, a display B24, a network interface (IF) B25, a camera B26 having an image sensor and a Global Positioning System (GPS) receiver B27. The microprocessor B20, as a controller of the mobile device B2, may execute the control program B22 stored in the memory B21. The input device B23 may include, without limitation, a keypad, a touch pad, a microphone, and the like to receive various inputs, such as order information form a customer. The display B24 may display information with respect to various operations being performed by the mobile device B2, such as receiving of a light-ID and transmission of the light-ID. The network IF B25 may communicate with a network to transmit remote order and receive corresponding information. The camera B26 or its image sensor may receive light ID being transmitted by a corresponding light transmitter when the mobile device B2 is located within a transmission range of the light transmitter. The camera B26 may be triggered, without limitation, manually, via an order application stored in the memory B21, or in response to a determination that the mobile device B21 has arrived at a premise of the store to receive the remote order. The memory B21 stores a control program B22, the order application and customer information.

The customer information may include personal information and/or vehicle information. The personal information may include, without limitation, a name of a customer, a phone number of a customer, an address (e.g., network address and/or mailing address) of a customer and the like. The vehicle information may include, without limitation, a license plate number of a customer vehicle, a state of license plate of a customer vehicle, a color of a customer vehicle, a type of a customer vehicle, a maker of a customer vehicle and the like. The mobile device B2 may transmit the customer information when transmitting the remote order. The mobile device B2 may also transmit GPS information detected by the GPS receiver B27 and indicate a location of the mobile device B2. The GPS information may be transmitted continuously or at predetermined intervals after sending the remote order and until arrival at a store to receive the order item or until receiving the ordered item. In an example, the mobile device B2 may transmit a current location of the mobile device B2 less frequently or terminate transmission thereof, once the store detects an arrival status of the mobile device B2 at a designated area on its premise. The location of the mobile device B2 may be determined once the mobile device B2 receives a light-ID from a light ID transmitter present at the store, and the mobile device B2 transmits the received-ID with the mobile device information, such as phone number associated with the remote order, to indicate that the mobile device B2 is located at an area corresponding to the light-ID and is ready to receive the remote ordered item.

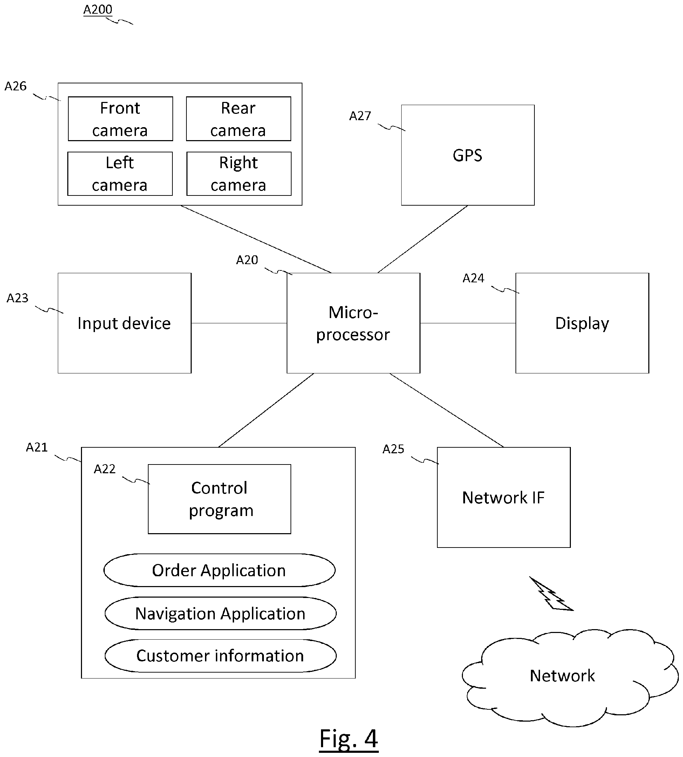

Fig. 4 is an exemplary schematic of a vehicle, according to an aspect of the present disclosure.

The vehicle A2 of Fig. 1 may include an internal system A200 which may be used to receive a light-ID and place an order in response to a user input. The internal system A200 includes a microprocessor A20, a memory A21 storing a control program A22, an input device A23, a display A24, a network IF A25, a camera system A26 including multiple cameras, each of which having an image sensor, and a Global Positioning System (GPS) receiver A27. The microprocessor A20, as a controller of the vehicle A2, executes the control program A22 stored in the memory A21. The input device A23 may include, without limitation, a keypad, a touch pad, a microphone, and the like to receive various inputs, such as order information form an occupant of the vehicle A2. The display A24 may display information with respect to various operations being performed by the internal system A200, such as receiving of a light-ID and transmission of the light-ID. The network IF A25 may communicate with a network to transmit remote order and receive corresponding information. The camera system A26 includes a front camera, a rear camera, a left camera and a right camera. However, aspects of the disclosure are not limited thereto, such that a camera system of a vehicle may include one or more cameras. Further, vehicles may alternatively may be equipped with a light-ID receiver.

The cameras included in the camera system A26 or image sensors included in the cameras may receive light ID being transmitted by a corresponding light transmitter when the vehicle A2 is located within a transmission range of the light transmitter. The camera system A26 may be triggered, without limitation, manually, via an order application stored in the memory A21, or in response to a determination that the vehicle A2 has arrived at a premise of the store to receive the remote order. The memory A21 stores a control program, the order application, a navigation application and the customer information described above.

The vehicle A2 may transmit the customer information when sending the remote order. The vehicle A2 may transmit GPS information detected by the GPS receiver A27 and indicating a location of the vehicle. The GPS information may be transmitted continuously after sending the remote order and also until receiving the ordered item. In an example, the vehicle A2 may transmit a current location of the vehicle A2 less frequently or terminate transmission thereof, once the store detects an arrival status of the vehicle A2 at a designated area on its premise. The location of the vehicle A2 may be determined once the vehicle A2 receives a light-ID from a light ID transmitter present at the store while the vehicle A2 is in a parked state. More specifically, the vehicle A2 may activate its camera system A26 to receive light-ID when the vehicle is set to a parked state. The vehicle A2 may transmit the received-ID with the vehicle information, such as license plate number associated with the remote order, to indicate that the vehicle A2 is located at an area corresponding to the light-ID and is ready to receive the remote ordered item. Further, if the vehicle A2 is connected to a mobile device via, for example, a Bluetooth connection, the vehicle A2 may also transmit, through the mobile device or via its own transmitter, phone number associated with the mobile device.

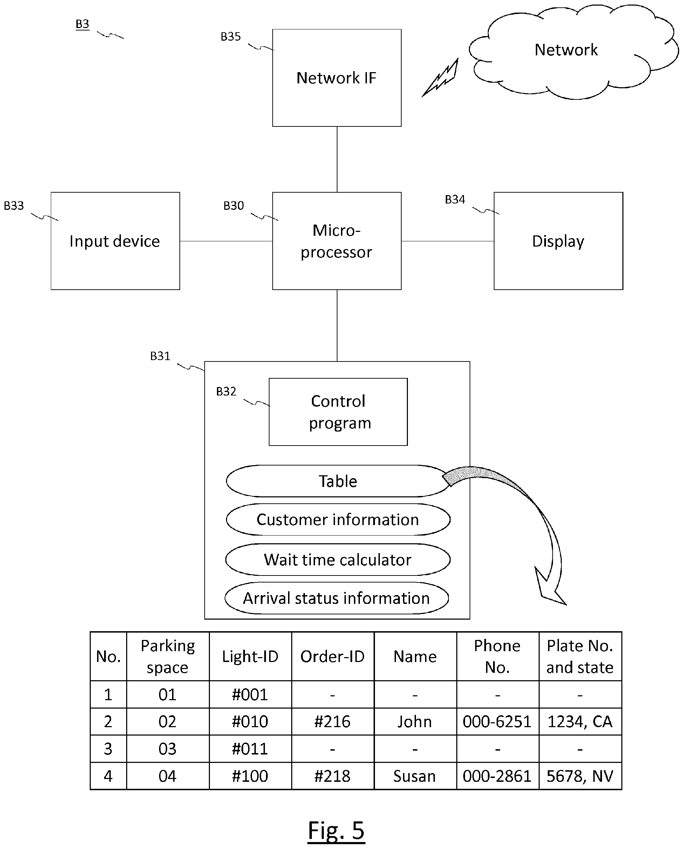

Fig. 5 is an exemplary schematic of a backend system, according to an aspect of the present disclosure.

The backend system B3 includes a microprocessor B30, a memory B31 storing a control program B32, an input device B33, a display B34 and a network IF B35. The microprocessor B30, as a controller of the backend system B3, may execute the control program B32 stored in the memory B31. The input device B33 may include, without limitation, a keyboard, a touch pad, a microphone, and the like to receive various inputs, from an operator. The display B24 may display information with respect to various types of information being received, transmitted, and/or managed by the backend system B3. The network IF B25 may communicate with a network to receive and transmit information related to the remote order. The memory B31 stores a table, the customer information described above, a wait time calculator, and latest information.

The table may include information related to a remote order, such as identification of a physical area on a merchant premise, a corresponding light-ID, order ID and customer identification information. An example of the table is also shown in a bottom of Fig. 5. The exemplary table shows each parking space associated with each light-ID unique to the parking space. In addition, when receiving the remote order, order information and customer information may be added into the table. Specifically, an order ID and select customer information, such as name, phone number, and plate number and state information are added to the table. However, aspects of the disclosure are not limited thereto. The order information may include, without limitation, an order-ID, an ordered item, an ordered time and the like. The customer information may include, without limitation, a phone number of a customer, an address of a customer, a license plate number of a customer vehicle, a state of license plate of a customer vehicle, a color of a customer vehicle, a type of a customer vehicle and a maker of a customer vehicle, and the like. The wait time calculator may calculate a time at which food is ready for retrieval by the customer, which may be calculated based on average food preparation time at the time of the order received. Further, the wait time calculator may calculate a time for food preparation to begin based on arrival status of the customer. More specifically, if the customer is at the premise of the merchant, food preparation should begin once the order is received. However, if it is determined that the customer will arrive in 30 minutes after a first order is initially placed, the backend system B3 may instruct other orders placed by on premise customers to be prepared first even if the orders are placed after the first order, such that the first order may be prepared more closely in line with the arrival time of the customer. Arrival status information may include arrival status of the customer and estimated time of arrival of the customer. For example, when a vehicle of the customer arrives on premise of the merchant store, the arrival status may be indicated as being arrived. In another example, the vehicle of the customer is indicated as being arrived when the vehicle is placed in park, receives light ID from a light ID transmitter, and transmits the received light ID.

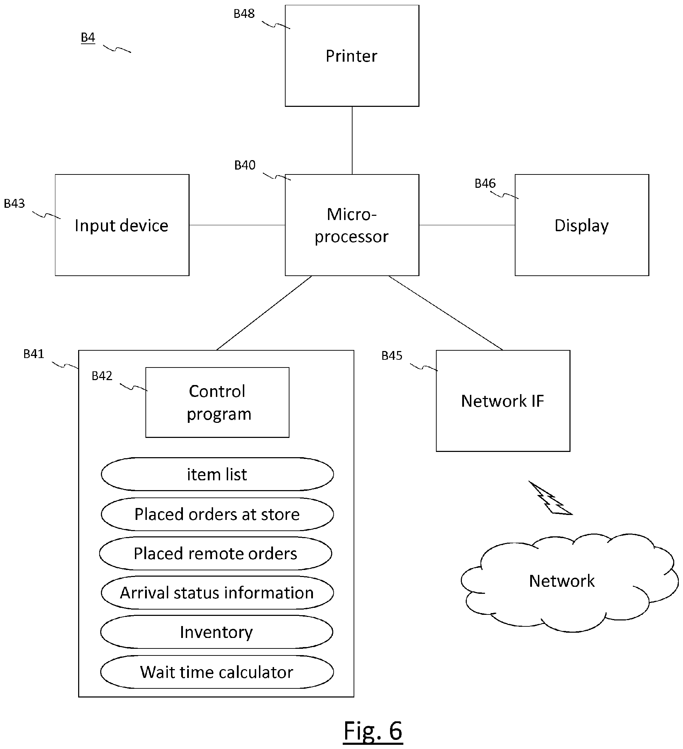

Fig. 6 is an exemplary schematic of a Point of Sales (POS) system, according to an aspect of the present disclosure.

The POS system B4 includes a microprocessor B40, a memory B41 storing a control program B42, an input device B43, a display B5, a network IF B45 and a printer B48. The microprocessor B40, as a controller of the POS system B4, may execute the control program B42 stored in the memory B41. The input device B43 may include, without limitation, a keyboard, a touch pad, a microphone, and the like to receive various inputs, from an operator. The display B46 may display information with respect to various types of information being received, transmitted, and/or managed by the POS system B4. The network IF B45 may communicate with a data network to receive and transmit information related to the remote order. The memory B41 stores information pertaining to an item or menu list that the store provides, placed orders at store, placed remote order, arrival status information, an inventory of the store, and the wait time calculator.

The item or menu list may include a listing of offerings provided by the store. The item list may be a menu list for a fast food restaurant, or a list of grocery items that may be available for purchase at a local grocer. The item list may be provided in accordance with inventory information. For example, only items having positive inventory may be included in the item list. The item list may be transmitted to the mobile device for selection of items to order or purchase.

Placed orders at store may provide information pertaining to orders placed on premise of the store, which may be handled differently from remote orders. Placed remote orders may provide information pertaining to orders placed off premise of the store, including expected arrival time. Typically, since customers placing orders placed on premise of the store are typically waiting to receive their order, such orders should be processed as soon as it is received. In contrast, remote orders placed may have an estimated arrival time associated with the placed order. In this regard, the remote orders may be held in abeyance until a customer is within a predetermined distance or arrival time from the store to begin preparation. By differentiating orders placed on premise of the store and remote orders, customers may be serviced quicker and receive more freshly prepared items or food.

Inventory may include information pertaining to items or foods offered at the store. Inventory information may be updated as orders are placed, such that orders for unavailable items will not be received or processed.

The wait time calculator may calculate a time at which food is ready for retrieval by the customer, which may be calculated based on average food preparation time at the time of the order received. Further, the wait time calculator may calculate a time for food preparation to begin based on arrival status of the customer. More specifically, if the customer is at the premise of the store, food preparation should begin once the order is received. However, if it is determined that the customer will arrive in 30 minutes after a first order is initially placed, the POS system B4 may instruct other orders placed by on premise customers to be prepared first even if the orders are placed after the first order, such that the first order may be prepared more closely in line with the arrival time of the customer. Arrival status information may include arrival status of the customer and estimated time of arrival of the customer. For example, when a vehicle of the customer arrives on premise of the merchant store, the arrival status may be indicated as being arrived. In another example, the vehicle of the customer is indicated as being arrived when the vehicle is placed in park, receives light ID from a light ID transmitter, and transmits the received light ID.

Each of the network IF B25, B35, B45 and A25 may include a transmitter to transmit information via the network, and a receiver to receive information from the network.

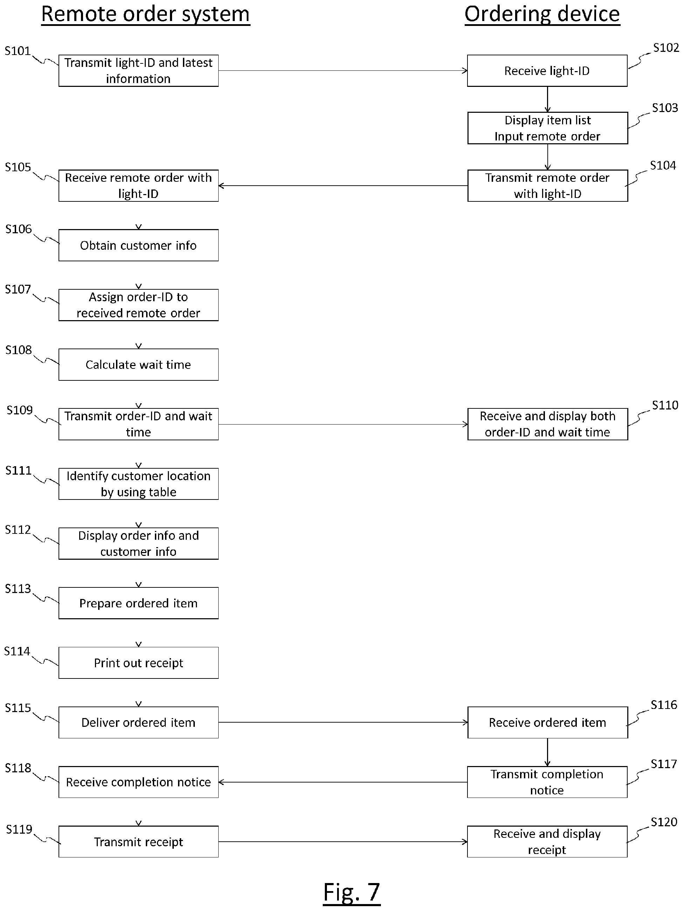

Fig. 7 is an exemplary flowchart of a remote order process using light-IDs, according to an aspect of the present disclosure.

In Fig. 7, a premise ordering process performed by a remote order system is described. For example, on premise may refer to property of the store, such as a parking lot or the store itself. At step S101, a light transmitter of the remote order system transmits its light-ID when a vehicle is parked on premise. For example, the light transmitter may be installed as a light fixture and positioned at various parts of the premise of the store. The remote order system 10 may have a vehicle sensing apparatus to detect a parked vehicle. In this case, when a sensor of the vehicle sensing apparatus senses the parked vehicle, a processor and a transmitter of the vehicle sensing apparatus may notify to the light transmitter associated with a parking space where a vehicle is detected as being parked by the vehicle sensing apparatus. Alternatively, a light transmitter may be equipped with a common sensor for detecting the parked vehicle. Upon detection of the vehicle by vehicle sensing apparatus or the light transmitter, the light transmitter may begin transmitting the light-ID by flashing or blinking. Otherwise, the light transmitter may transmit the light-ID at any time without stopping it.

At step S102, a customer device receives the light-ID transmitted by the light transmitter of the remote order system. The customer device may be a smartphone, a wearable electronic device or a vehicle. However, aspects of the disclosure are not limited thereto, such that the customer device may be any portable or mobile device having a light ID receiver, a processor, and a transmitter. At step S103, the mobile device displays an item list (e.g. menu for a restaurant or stocks for super market) on its display. When the item list is displayed, the order application may be activated. The mobile device may store the item list in its memory to display the item list when it is recalled. Similarly, the vehicle may store the item list in its memory to display the item list when it is recalled. Otherwise, the mobile device or the vehicle may receive the item list from a backend system or a POS system via the network. In addition, the mobile device or the vehicle may receive updated information (e.g. for new items or non-stocked items), which is changed from moment to moment and refreshed, from the backend system or POS system via the network. Furthermore, at step S103, the mobile device or the vehicle may input or receive remote order information in response to a customer input. In other words, the customer places the remote order via the mobile device or an internal system installed on the vehicle.

At step S104, the mobile device or the vehicle transmits the remote order with the light-ID to the backend system. More specifically, the mobile device transmits, via the network, the remote order placed using the mobile device to the backend system together with light-ID corresponding to a light transmitter, which may be associated with a specific physical area of the store premise (e.g., parking space 02 of Figure 2). Further, the vehicle transmits, via the network, the remote order placed using the internal system of the vehicle to the backend system together with light-ID corresponding to another light transmitter, which may be associated with a specific physical area of the store premise (e.g., parking space 04 of Figure 2).

At step S105, the backend system of the remote order system receives the remote order with the light-ID. The received remote order also includes a customer-ID (e.g. number or name) which may be one of the customer information to identify the customer. At step S106, the backend system obtains further customer (personal) information (e.g. a phone number of a customer, an address of a customer, a license plate number of a customer vehicle, a state of license plate of a customer vehicle, a color of a customer vehicle, a type of a customer vehicle and a maker of a customer vehicle, and on the like) associated with the customer-ID from a memory of the POS system. At step S107, the backend system assigns a new order-ID to the received remote order. Then information of the table stored in a memory of the backend system is updated to add new information. At step S108, the backend system calculate a wait time for the remote order based on contents of the remote order and operating status of the store (e.g., average order processing time given order traffic).

At step S109, the backend system transmits the assigned order-ID and the calculated wait time to the mobile device or the vehicle via the network. At step S110, the mobile device or the vehicle receives the assigned order-ID and the calculated wait time, and display the received information on each display. At step S111, the backend system identifies a customer location (i.e. parking space) based on the light-ID with reference to a table of information stored in the memory of the backend system. Then the backend system notifies the identified customer location to the POS system. At step S112, the POS system displays the customer information including the customer location and the order information, which is associated with the displayed customer information. The order information may include the ordered item and the order-ID on the display of the POS system. However, aspects of the disclosure are not limited thereto, such that the POS system may display other information.

At step S113, a person and/or a machine prepare the ordered item. At step S 114, the micro-processor of the POS system instructs the printer to print out a receipt, which may show at least the order-ID and price information with respect to the remote order. However, aspects of the present disclosure are not limited thereto, such that the printed receipt may show further information in addition to the order-ID and the price information. For example, information pertaining to the customer location, information pertaining to the customer (personal) information (e.g., prefers no ice in drinks), and the order information may be additionally shown.

At step S115, a deliverer (e.g. a person or a machine) delivers the ordered item to its related customer location. For example, since light-ID corresponds to a particular physical location within the store premise, such as a pickup area, parking spaces, or a specific table, a delivery machine may be configured to deliver the prepared order to the location corresponding to the light-ID. At step S116, the customer receives the ordered item. At step S117, the mobile device or the vehicle transmits a completion notice to the backend system or the POS system in response to a user input. At step S118, the backend system or the POS system receives the completion notice. At step S119, the backend system or the POS system transmits an electrical receipt to the mobile device or the vehicle. At step S120, the mobile device or the vehicle receives and displays the electrical receipt.

Furthermore, the micro-processor of the POS system may instruct the printer to further print out a finder which may show more specific customer (personal) information than the receipt. For instance, the finder may show one or some of a phone number of a customer, an address of a customer, a license plate number of a customer vehicle, a state of license plate of a customer vehicle, a color of a customer vehicle, a type of a customer vehicle and a maker of a customer vehicle to help the deliverer find the customer. In addition, the micro-processor may output the finder to a mobile device of the deliverer to help the deliverer find the correct customer.

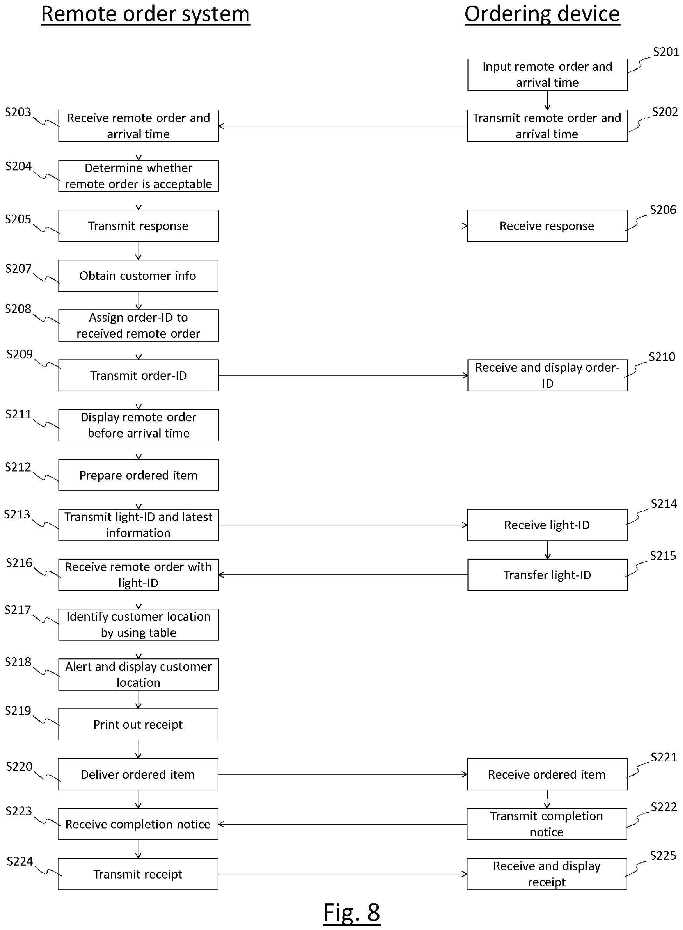

Fig. 8 shows an exemplary flowchart of a remote order process using light-IDs, according to an aspect of the present disclosure.

In Fig. 8, an off premise remote ordering processes performed by the remote order system is described. More specifically, in an off premise remote ordering process, a customer places an order via an ordering device at a remote place outside of the store and then later comes to the store to pick up the order. An ordering device may include a mobile device (e.g., a smart phone), an internal system of a vehicle, or any portable or mobile device having a light ID receiver, a processor, and a transmitter. Further, the remote order system may include a light ID transmitter, a backend system, and a POS system.

At step S201, the ordering device receives remote order information in response to a customer input, and further determines an expected arrival time of the customer at a store in response to a customer location, which may be at a remote place outside of the store. The customer's location may be determined via a customer input, receipt of GPS signal, or the like.

At step S202, the ordering device transmits the remote order information and the expected arrival time of the customer. At step S203, the remote order system (e.g., backend system or the POS system) receives the remote order information and the expected arrival time of the customer. At step S204, the remote order system determines whether the remote order is acceptable or fulfilled in light of other placed orders and contents of the remote order. At step S205, the remote order system transmits an acceptance or a refusal for the remote order as a response to the ordering device. When the remote order is not acceptable due to a determination that an ordered item cannot be prepared by the expected arrival time, the remote order system may calculate an estimated wait time and transmit the calculated wait time as the response to the ordering device. At step S206, the ordering device receives the response.

At step S207, the remote order system (e.g., backend system) obtains customer information (e.g. a phone number of a customer, an address of a customer, a license plate number of a customer vehicle, a state of license plate of a customer vehicle, a color of a customer vehicle, a type of a customer vehicle and a maker of a customer vehicle, and on the like) associated with the customer-ID from its memory. At step S208, the remote order system assigns a new order-ID to the received remote order. Then information provided in a table stored in the memory is updated to add the new order-ID information. At step S209, the remote order system transmits the assigned order-ID to the ordering device via the network. At step S210, the ordering device receives the assigned order-ID.

At step S211, the remote order system (e.g., POS system) displays the remote order to notify when it is a predetermined time before the arrival time. The predetermined time may refer to an expected time to fulfill the received remote order. The predetermined time could be changed based on a user input or other placed orders. At step S212, a person and/or a machine prepares the ordered item.

At step S213, the light transmitter of the remote order system transmits its light-ID and the latest or updated information when the ordering device arrives, for example, when a vehicle is parked. In an example, the ordering device may be the vehicle or may be carried by the customer in the vehicle. The remote order system may further include a vehicle sensing apparatus to detect a parked vehicle by using one of well-known technologies. In this case, when a sensor of the vehicle sensing apparatus senses the parked vehicle, a processor and a transmitter of the vehicle sensing apparatus may notify to the light transmitter associated with the parking space where the vehicle is detected as being parked by the vehicle sensing apparatus. Then the light transmitter transmits the light-ID by flashing or blinking. Otherwise, the light transmitter may continuously transmit the light-ID or at predetermined intervals.

At step S214, the ordering device receives the light-ID. At step S215, the light-ID is transferred to the remote order system (e.g., backend system). At step S216, the remote order system receives the remote order with the light-ID. The received remote order also includes a customer-ID (e.g. number or name) which may be one of the customer information that may be used to identify the customer.

At step S217, the remote order system identifies a customer location (i.e. a parking space) based on the received light-ID with reference to the table stored in its memory. At step 218, the backend system alerts the POS system that the customer has arrived and notifies the customer location to the POS system. At step S219, the micro-processor of the POS system instructs the printer to pint out a receipt which shows at least the order-ID and price information with respect to the remote order. The printed receipt may show further information in addition to the order-ID and the price information. For example, information pertaining to the customer location, information pertaining to the customer (personal) information (e.g., prefers paper bags over plastic), and the order information may be additionally shown.

At step S220, a deliverer (e.g. a person or a machine) delivers the ordered item to its related customer location. For example, since light-ID corresponds to a particular physical location within the store premise, such as a pickup area, parking spaces, or a specific table, a delivery machine may be configured to deliver the prepared order to the location corresponding to the light-ID. At step S221, the customer receives the ordered item. At step S222, the ordering device transmit a completion notice to the remote order system in response to a user input. At step S223, the remote order system receives the completion notice. At step S224, the remote order system transmits an electrical receipt to the ordering device. At step S225, the ordering device displays the electrical receipt.

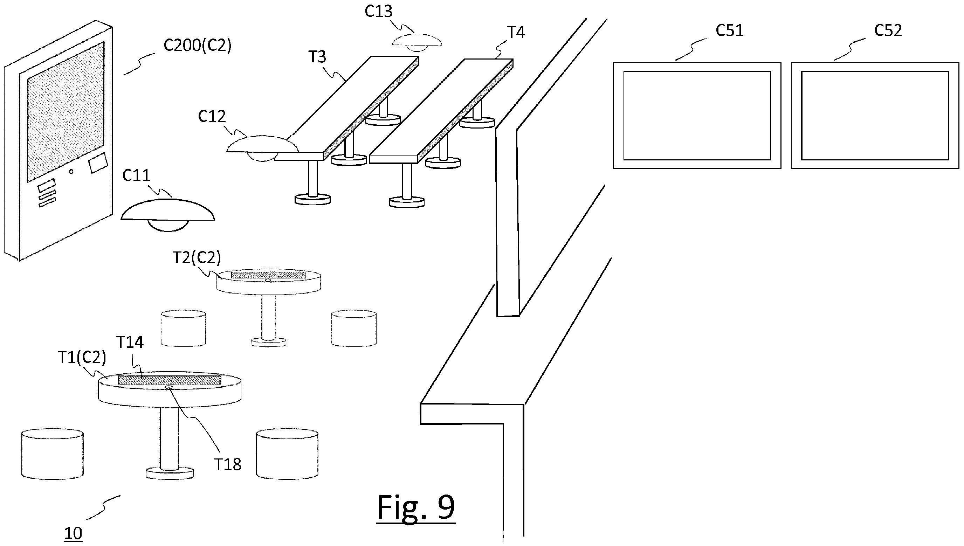

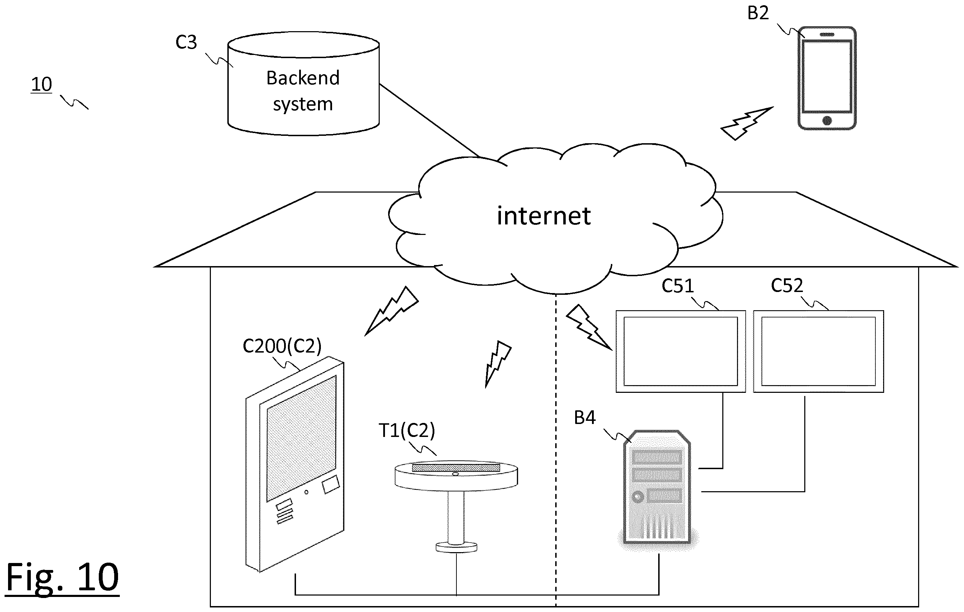

Fig. 9 and 10 show another exemplary schematic of a remote order system using light-IDs, according to an aspect of the present disclosure.

The remote order system 10 includes overhead light fixtures C11, C12 and C13, ordering devices (stationary ordering device C2 and mobile device B2), backend system C3 and Point of Sales (POS) system B4. The POS system B4 includes monitors C51 and C52. The stationary ordering device C2 may include a kiosk C200 and table devices T1 and T2.

As shown in Fig. 10, the ordering devices C2 and B2, the backend system C3, and the POS system B4 are connected via a network. The network may be a wired network, a wireless network or a combination thereof. Thus orders placed with the ordering devices can be transmitted, via the network, to the backend system C3 or the POS system B4. The POS system B4 may display information with respect to the placed order, which may be received from the ordering device, on the monitors C51 and/or C52. As a result, an employee of the store can prepare the ordered items (e.g., cooking some foods) with checking the information displayed on the monitors C51/C52.

The overhead lighting devices C11, C12 and C13 located within a store include a light source that performs a visible light communication, which may be described by US Publication Nos. 2013/0330088 and 2014/0232903, which are herein incorporated by reference. More specifically, each of the overhead lighting devices C11, C12, and C13 can be flashing or blinking in a particular sequence, pattern or the like to transmit a light identification (light-ID) assigned thereto. The overhead lighting devices C11, C12 and C13 have different unique identifications (IDs), each of which is associated with a particular location of the store, such as one of pick-up places (i.e., tables T1, T2, T3 and T4). In an example, the overhead light device C11 and its assigned light ID may be associated with the table device T1 that may be disposed or installed on a table on which customers may dine when opting to dine at the store. The overhead light device C12 and its assigned light ID may be associated with the table device T2 that may be disposed or installed on a table on which customers may dine when opting to dine at the store. The overhead lighting C13 and its assigned light ID may be associated with long tables T3-T4, which may be a designated pickup area where customers pick up foods to-go. The associations between the overhead lighting devices C11, C12 and C13 (and the light-IDs thereof) and specific tables (and their respective locations) within the store are stored in a memory of the backend system C3.

The kiosk C200, which may be one example of the ordering devices of the system 10, is located in the store. Customers may place an order (e.g., foods) by using the kiosk C200. The table devices T1 and T2 including a table display T14 may be another example of an ordering devices of the system 10. Customers may place an order by using the table devices T1 or T2. The table device T1 includes a table light transmitter T18, which may transmits a light-ID same as the overhead lighting device C11. Further, the table light transmitter and the overhead light device C11 may be associated with the same table, in which the table device T1 may be installed. Similarly, a table light transmitter of the table device T2 may transmit a light-ID same as the overhead lighting device C12. As described above, customers may place an order by using the mobile device B2, which may be one of the ordering devices of the system 10. The order placed by the ordering device may be transmitted to the POS system B4 directly or via the backend system C3.

The backend system C3, by itself or through orchestration with other systems, may utilize the light-ID transmitted from the mobile device B2 to identify a location of a user within the premise of the store (e.g. a table where the customer is waiting for ordered items) with reference to a database or a table of information stored in a memory of the backend system B3. The backend system B3, by itself or through orchestration with other systems, may communicate with the POS system B4 to notify that a customer that placed the respective order is sitting at a specific table in the store. The POS system B4 in the store may receive the placed order directly from the ordering devices or the backend system C3.

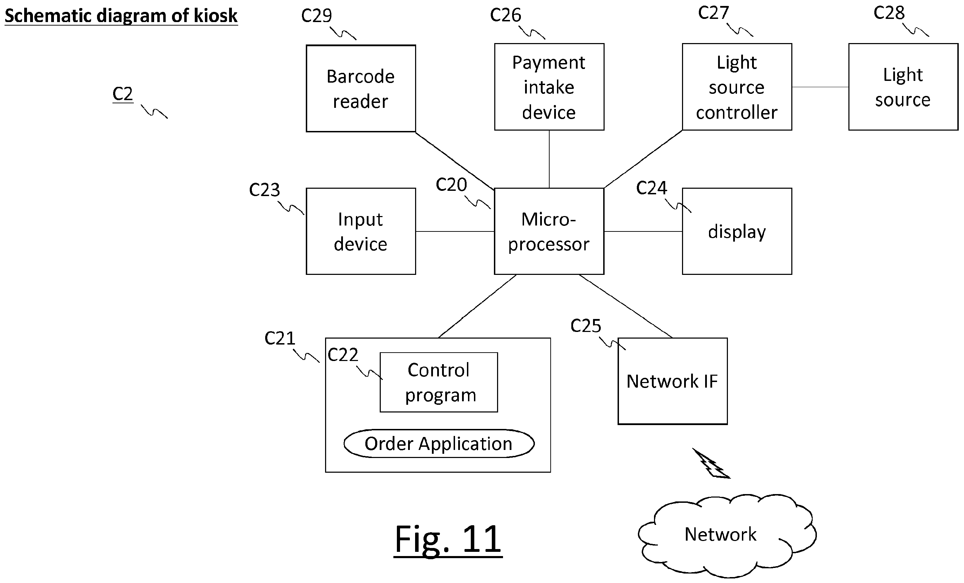

Fig. 11 shows an exemplary schematic of a stationary ordering device, according to an aspect of the present disclosure.

The stationary ordering device C2 (e.g., the kiosk C200, the table device T1-T2, or the like) includes a microprocessor C20, a memory C21 storing a control program C22, an input device C23, a display C24, a network interface (IF) C25, a payment intake device (e.g., card reader, a cash reader, or a NFC reader for reading of mobile payment applications) C26, a light source controller C27, a light source C28 and a barcode reader C29.

The microprocessor C20, as a controller of the stationary ordering device C2, may execute the control program C22 stored in the memory C21. The memory C21 further stores an order application installed in and executed by the stationary ordering device C2. Customers may place an order with the order application executed on the stationary ordering device C2. The input device C23 may include physical buttons attached on a housing of the stationary ordering device C2 or a touch panel layered with the display C24. Customers may control the order application through the input device C23 and the display C24. The display C24 displays, for example, a list of items (e.g., food menu) and prices thereof stored in the order application. The display C24 may also display nutrition information for each food item, such as calorie of the food item. When one or more of the items are selected by a customer with the input device C23, the display C24 may display payment options for purchasing the selected food items (e.g., pay by credit card, debit card, cash or mobile payment application). Then the customer may proceed with purchasing the selected items with the input device.

The network interface (IF) C25 may communicate with other devices (e.g., the mobile device B2, the POS system C4, the backend system C3, and on the like) via the network. In other words, the microprocessor C20 may receive or transmit information via the network IF and through the network. For example, the microprocessor C20 may download programs for updating the order application and/or the list of items via the network IF C25.

The payment intake device C26 may read, for example, card information (e.g., credit card information, debit card information, or the like) and outputs the card information to the microprocessor C20. Further, the cash reader C26 may read, for example, currency inserted therein to calculate total amount of currency read by the payment intake device C26, then outputs the total amount to the microprocessor C20. Alternatively, the microprocessor C20 may receive the payment information (e.g., card information) transmitted from the mobile device B2 via the network or via an NFC transmission.

The light source controller C27, based on an instruction by the microprocessor C20, controls flashing or blinking operations of the light source C28 to be of certain pattern or sequence, the flashing or blinking operations of the light source C28 may correspond to a light-ID stored in the memory C21. Thus, the microprocessor C20 (and the light source controller C27) causes the light source C28 to execute the lashing or blinking operations of the light source C28 for transmitting the light-ID. Further, the microprocessor C20 performs visible light communication by using the light source C28 as a transmitter of the light ID. The barcode reader C29 reads a barcode (e.g., a bar code, a multi-dimensional bar code, QR codes, and the like) and output it to the microprocessor C20.

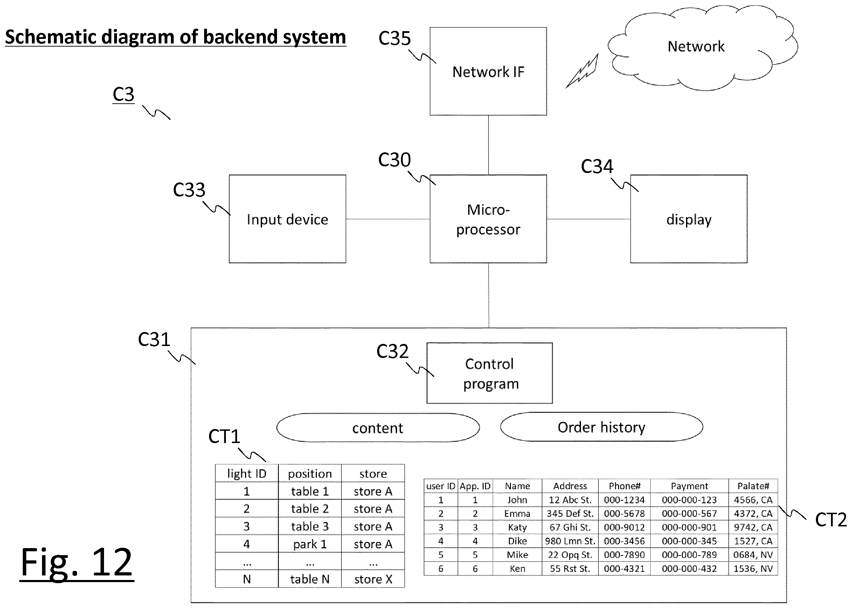

Fig. 12 shows an exemplary schematic of a backend system, according to an aspect of the present disclosure.

The backend system C3 includes a microprocessor C30, a memory C31 storing a control program C32, an input device C33, a display C34, and a network interface (IF) C35. The microprocessor C30, as a controller of the backend system C3, may execute the control program C32 stored in the memory C31. The input device C33 may include physical buttons attached on a housing of the stationary ordering device C2 or a touch panel layered with the display C24. The display C34 may display any data stored in the memory C31. The network interface (IF) C35 may communicate with other devices (e.g., the stationary ordering device C2, the mobile device B2, the POS system C4, and on the like) via the network. More specifically, the microprocessor C30 may receive or transmit information via the network IF C35 and through the network.

The memory C31 may store some content including an items list (e.g., food menu) and prices thereof, which may be transmitted to the stationary ordering device C2, the mobile device B2 and the POS system C4. The memory C31 may further store some order histories for each customer. The memory C31 further stores a table CT1 including association information, which defines relations between light-IDs and corresponding physical location within the store. For example, a light source transmitting a light ID 1 is positioned nearby and corresponds to a table 1 within a store A. More specifically, the light ID 1 corresponds to table 1. Thus, when the backend system C3 receives the light ID 1, which was scanned by and transmitted from the mobile device B2 of a customer via the network, the backend system C3 may determine that the customer is positioned at the table 1 of store A. The position information (e.g., pick-up place information) associated with the light IDs may not only include table identifier, which may indicate its location, but also parking space number, which may indicate a position of the parking space. The memory C31 further stores a table CT2 which corresponds to customer information. The customer information may include, but not limited to, user IDs (customer IDs), application IDs, names, addresses, phone numbers, payment information (e.g., credit card numbers or debit card numbers) and vehicle plate numbers for each customer. The application IDs may be assigned to each application installed in the mobile device B2. The application corresponding to the application ID may be used for placing an order in the store or in a remote place away from the store.

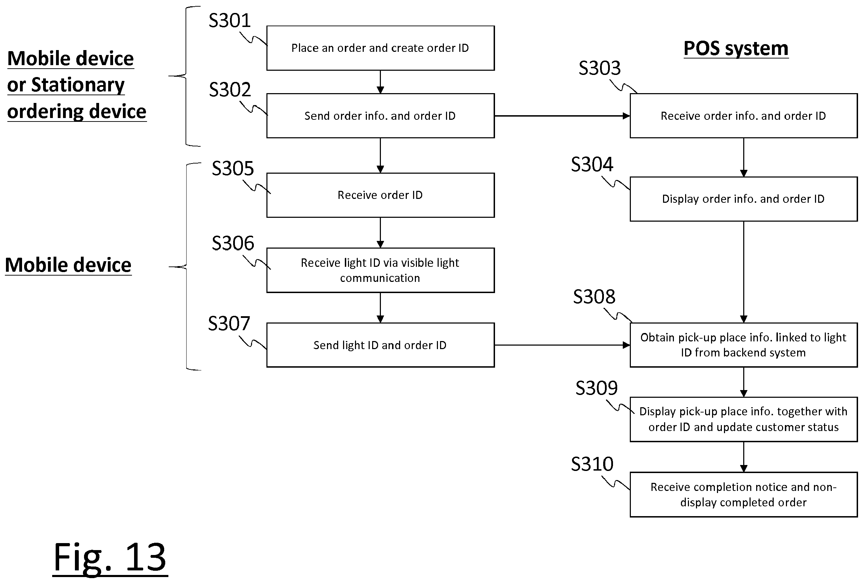

Fig. 13 shows an exemplary flowchart of a remote order process using light-IDs, according to an aspect of the present disclosure.

At step S301, an order is placed and an order ID corresponding to the placed order is created by an ordering device, which may be the mobile device B2, or the stationary ordering device C2 including the kiosk C2 and the table devices T1 and T2. At step S302, order information with respect to the placed order and the created order ID are sent to the POS system B4 via the network. The order information may include ordered items, payment information, and related information.

At step S303, the order information and the order ID are received by the POS system B4. At step S304, the order information and the order ID are displayed on one or both of the displays C51 and C52.

At step S305, the order ID created at step S301 is obtained by the mobile device B2. For example, when the order is placed by and the order ID is created by the stationary ordering device C2 at step S301, the mobile device may receive the order ID transmitted from the stationary ordering device C2 via the network. In another example, when the order is placed by and the order ID is created by the mobile device B2 at step S301, the mobile device B2 may not have to perform communication via the network. At step S306, a light ID, transmitted from the light transmitter corresponding to a designated area of the store (pick-up places), such as tables or parking spaces, is received or scanned by the mobile device B2 through visible light communication. At step S307, the light ID and the order ID are sent to the POS system B4 by the mobile device B2.

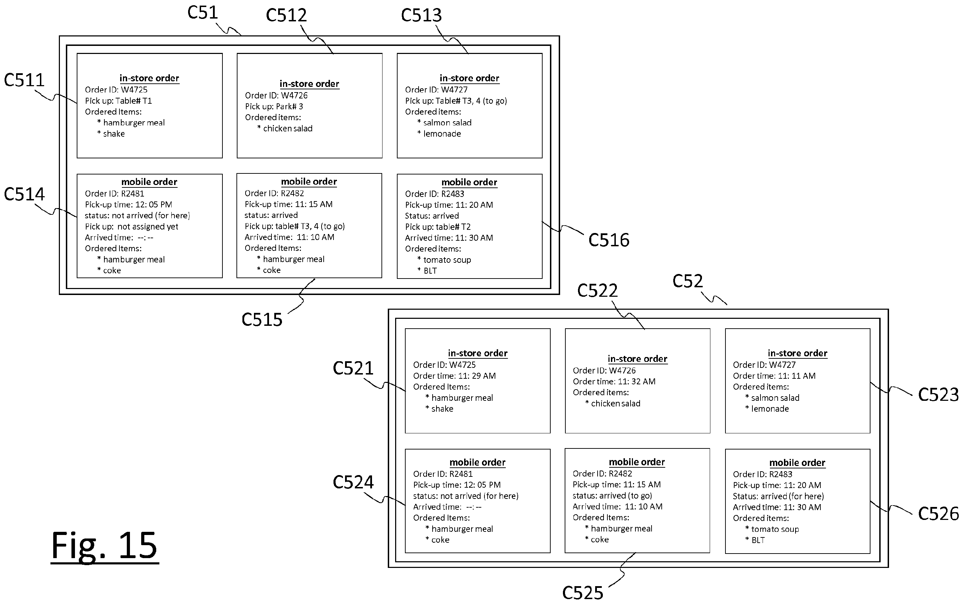

At step S308, pick-up place information associated with the received light ID is obtained by the POS system B4 from the backend system C3. More specifically, when the POS system B4 receives the light ID from the mobile device B2, the POS system B4 accesses to the table CT1 stored in the backend system C3 for obtaining pick-up place information linked to the received light ID. Alternatively, the table CT1 defining associations between light IDs, corresponding light sources, and pick-up place information (e.g., designated area of the store) may be stored in the POS system B4. In this case, the microprocessor B40 of the POS system B4 accesses to the memory B41 implemented therein for obtaining pick-up place information. At step S309, the order ID and the associated pick-up information are displayed on one or both of the displays C51 and C52. Further a customer status linked to the order ID may be updated from a not-arrived status to an arrived status as described hereinafter in more detail with Fig.15.

At step S310, a completion notice is received by the POS system B4. Further, the completed order information displayed on the displays C51 or C52 may be hidden from view (non-displayed). The completion notice may be transmitted from the mobile device B4 in response to a user input. For example, when ordered items are served to a customer and the customer operates the mobile device B4 for sending the completion notice to the POS system B4, the completion notice can be received by the POS system B4. Further, when the printer B48 prints out a receipt, the completion notice with respect to the printed receipt may be transmitted from the printer B48 to the microprocessor B40. Alternatively, an operation for printing out the receipt may be detected as the completion notice by the microprocessor B40. For example, when a working staff of the store serves ordered items to customers, the working staff may print out the receipt in order to give it to the customer with the ordered items. Then the completion is noticed to the POS system B4 automatically. Further, the completion notice may be transmitted in response to inputs with the input device B43 by working staffs of the store. For example, working staffs may send the completion notice with the input device B43. In another example, when the POS system B4 receives a first light ID and a first order ID for obtaining correspondent pick-up place information, and further receives a first light ID and a second order ID different from the first order ID after receiving the first light ID and the first order ID, the received first light ID and the second order ID may be treated as a completion notice (because it indicates a first customer corresponding to the first order ID has left from a certain table associated with the first light ID and a second customer corresponding to the second order ID has arrived at the certain table).

In addition, the mobile device B2 may access to the backend system C3 to obtain pick-up place information corresponding to the received light ID instead of the POS system B4. In this case, in place of the light ID, the obtained pick-up place information may be transmitted to the POS system B4 together with the order ID. In addition, steps S307-S309 may be repeated. For example, when a customer, who has sent the light ID associated with the table T1 and the order ID to the POS system at step S307, moves to another table T2 and receives another light ID associated with the table T2 there, the mobile device B2 may further transmit the light ID associated with table T2 and the order ID. After that, the pick-up place information corresponding to the table T2 is obtained and the updated pick-up place information (i.e., table T2) is displayed instead of the old one (i.e., table T1).

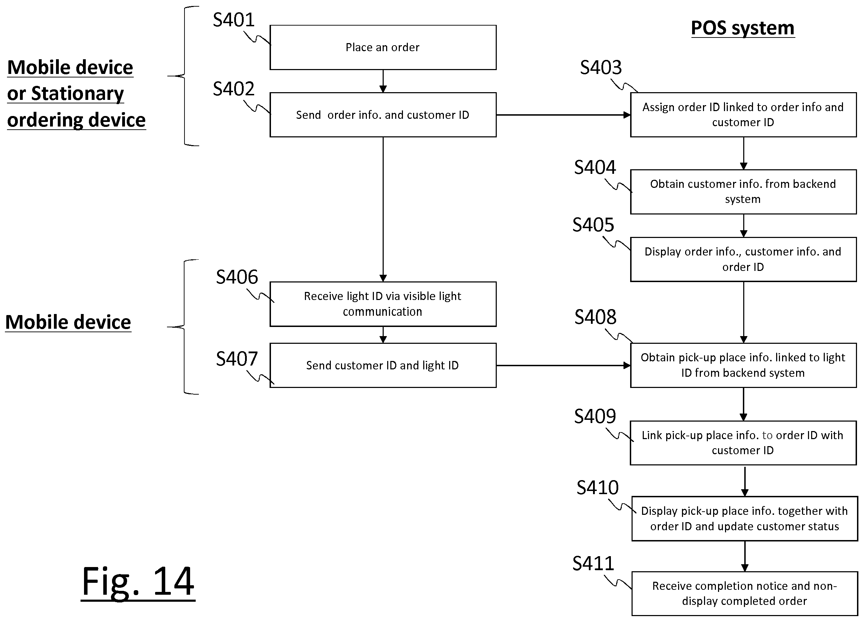

Fig. 14 shows an exemplary flowchart of a remote order process using light-IDs, according to an aspect of the present disclosure.

One of differences from the flowchart of Fig. 13 is use of a customer ID in addition to an order ID and light-ID.

At step S401, an order is placed by the mobile device B2 or the stationary ordering device C2 including the kiosk C2 and the table devices T1 and T2. At step S402, order information with respect to the placed order and a customer ID are sent to the POS system B4 via the network. The order information may include ordered items, payment information, and related information. The customer ID may include, but not limited to, any information listed in the table TC2. More specifically, information related to customer ID assigned by the store or an entity (e.g., company) owning the store, application ID assigned from the store or the entity owning the store when installed into the mobile device B2, name, address, phone number, payment information (e.g., credit card numbers or debit card numbers) and vehicle plate number may be included in the customer ID. At least one of the customer IDs may be stored in the mobile device B2. Thus, when the order is placed by the mobile device B2, the mobile device B2 may transmit the customer ID stored in the memory B21 in the mobile device B2 to the POS system B4 via the network. On the other hand, when the order is placed by the stationary ordering device C2, payment information (e.g., a part of or full of card number), which may be used for carrying out a transaction and read with the card reader C26, may be transmitted, as the customer ID. The customer ID may be transmitted from the stationary ordering device C2 to the POS system B4 via the network. In another option, the stationary ordering device C2 may request a customer to input a unique ID. The unique ID may be transmitted to the POST system B4 as a customer ID.

At step S403, an order ID is created. Then the order ID is assigned to the received customer ID and the order information with respect to the placed order. More specifically, the created order is associated to the both customer ID and the order information. At step S404, customer information corresponding to the received order ID may be obtained from the backend system C3 by the POS system B4. Accordingly, information with respect to a customer who placed the order is added to the POS system B4. At step S405, the order information, the customer information and the order ID may be displayed on one or both of the displays C51 and C52.

At step S406, a light ID, transmitted from the light sources nearby pick-up places (e.g., tables or parking spaces), is received or scanned by the mobile device B2 through visible light communication. At step S407, the light ID and the customer ID are sent to the POS system B4 by the mobile device B2.

At step S408, pick-up place information associated with the received light ID may be obtained by the POS system B4 from the backend system C3. More specifically, when the POS system B4 receives the light ID from the mobile device B2, the POS system B4 may access the table CT1 stored in the backend system C3 for obtaining pick-up place information associated with the received light ID. Alternatively, the table CT1 defining associations between light IDs, corresponding light sources, and pick-up place information may be stored in the POS system B4. In this case, the microprocessor B40 of the POS system B4 may access its memory B41 for obtaining pick-up place information. At step S409, the obtained pick-up place information is linked to or associated with the order ID with the customer ID. In other words, the obtained pick-up place information and the order ID, which correspond to the same customer ID, are associated each other. At step S410, the order ID and the pick-up information linked to or associated with the same customer ID are displayed on one or both of the displays C51 and C52. Further, a customer status linked to the order ID may be updated from a not-arrived status to an arrived status as described hereinafter in detail with Fig.15.

At step S411, a completion notice is received by the POS system B4, then the completed order information displayed on the displays C51 or C52 may be hidden from view (non-displayed). The completion notice may be transmitted from the mobile device B4 in response to a user input. For example, when ordered items are served to a customer and the customer operates the mobile device B4 for sending the completion notice to the POS system B4, the completion notice can be received by the POS system B4. Further, when the printer B48 prints out a receipt, the completion notice with respect to the printed receipt may be transmitted from the printer B48 to the microprocessor B40. Alternatively, an operation for printing out the receipt may be detected as the completion notice by the microprocessor. For example, when a working staff of the store serves ordered items to customers, the working staff may print out the receipt in order to give it to the customer with the ordered items. Then the completion is noticed to the POS system B4 automatically. Further, the completion notice may be transmitted in response to inputs with the input device B43 by working staffs of the store. For example, working staffs may send the completion notice with the input device B43. In another example, when the POS system B4 receives a first light ID and a first customer ID for obtaining correspondent pick-up place information, and further receives a first light ID and a second customer ID different from the first customer ID after receiving the first light ID and the first customer ID, the received first light ID and the second customer ID may be treated as a completion notice (because it indicates a first customer corresponding to the first customer ID has left from a certain table associated with the first light ID and a second customer corresponding to the second customer ID has arrived at the certain table).

In addition, the mobile device B2 may access to the backend system C3 to obtain pick-up place information corresponding to the received light ID instead of the POS system B4. In this case, in place of the light ID, the obtained pick-up place information may be transmitted to the POS system B4 together with the order ID. In addition, steps S407-S410 may be repeated. For example, when a customer, who has sent the light ID associated with the table T1 and the order ID to the POS system at step S407, moves to another table T2 and receives another light ID associated with the table T2 there, the mobile device B2 may further transmit the light ID associated with table T2 and the customer ID. After that, the pick-up place information corresponding to the table T2 is obtained and linked to the order ID with the customer ID. The updated pick-up place information (i.e., table T2) is displayed instead of the old one (i.e., table T1).

Fig. 15 shows a display of exemplary order information, according to an aspect of the present disclosure.

The displays C51 and C52 may be installed at different spaces. For example, the display C51 may be placed nearby where prepared orders (e.g., food) are placed so that staff members of the store can check displayed information for each order before serving them. The display C52 may be placed in an order preparing area (e.g., kitchen) within the store so that the staff members can prepare ordered items (e.g., food) with checking information for each order. Thus, information displayed on the display C51 and information displayed on the display C52 may be not be identical because of difference of intended purpose. However, aspects of the disclosure are not limited thereto, such that similar information may be provided, where applicable.

The display C51 displays order information C511-C516. The display C52 displays order information C521-C526, each corresponding to the order information C511-C516, respectively. The order information C511-C513 and C521-C523 may be for in-store orders, which may be conducted with a stationary ordering device C2 located within the store. The order information C514-C516 and C524-C526 may be for remote orders, which may be conducted with mobile device B2. The display C51 and C52 may indicate a plurality of order formats (e.g., in-store order and mobile order). In an example, upon an order placed by the stationary ordering device C2, the order may be displayed as an in-store order, like as the order information C511-C513 and C521-C523. On the other hand, upon an order placed by the mobile device B2, the order may be displayed as a mobile order, like as the order information C514-C516 and C524-C526.

As shown in Fig. 15, the in-store order information C511-C513 may indicate an order ID, a pick-up place and ordered items. The in-store order information C521-C523, corresponding to the in-store order information C511-C513, may indicate an order ID, ordered items and ordered time at which an order was placed or the POS system received the order information. The mobile order information C514-C516 may indicate an order ID being different numbering from an order ID for the in-store order, (estimated) pick-up time, (arrival) status, arrived time and ordered items. The estimated pick-up time may be calculated by the mobile device, the stationary ordering device, the POS system, the backend system or a combination thereof based on inputs by a customer. Alternatively, the estimated pick-up time may be input by a customer using the mobile device or the stationary ordering device. The arrival status and arrived time may be updated (e.g., from a not-arrived state to an arrived state) in response to detecting that the mobile device received a light ID associated with a pick-up place. The arrival status may further indicate an order was placed as "for here" or "to go" when a customer has not arrived yet and a pick-up place when the customer has arrived. Thus, a customer may select one of "for here" or "to go" when ordering, then the information may be sent the POS system as order information. The arrived time may correspond to time at which the mobile device places an order or the POS system receives order information from the mobile device. The mobile order information C524-C526, corresponding to the mobile order information C514-C516, may indicate an order ID, (estimated) pick-up time, (arrival) status, arrived time and ordered items. The order information C521-C526 may further indicate pick-up place information similar to the order information C511-C516.

When the order information C511 and/or C521 is displayed, if the POS system B4 receives a new order item and a new order ID thereof and obtains table# T1 as a pick-up place information corresponding to the new order ID, the new order item and/or the new order ID may be added to the order information C511 and C521 (i.e., may be displayed within the order information C511 and C521) because it indicates that a group including plural customers who each placed an order share a table and it might be better to serve their ordered items at the same time. Alternatively, the order item and the new order ID may be displayed next to the order information C511 and/or C521 (e.g., between the order information C511(C521) and C512(C522)).

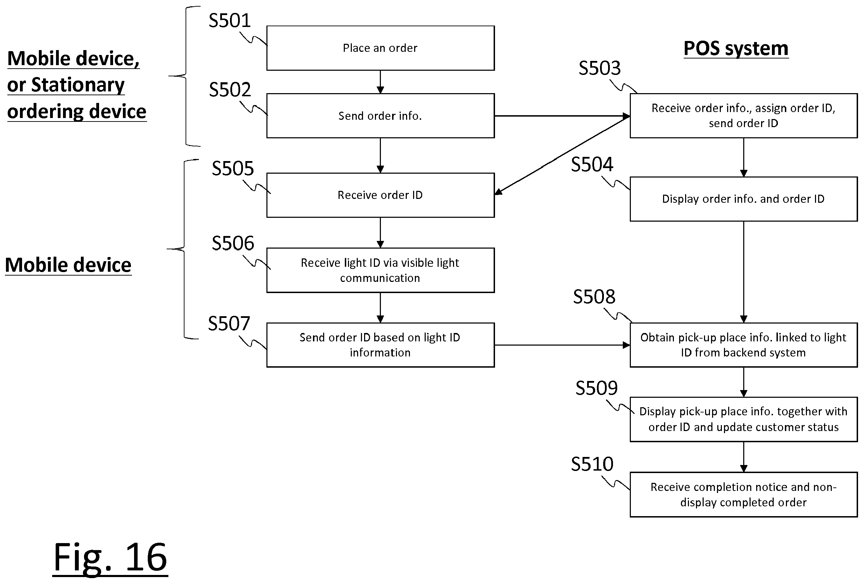

Fig. 16 shows an exemplary remote ordering process using light-IDs, according to an aspect of the present disclosure.

At step S501, an order is placed by the mobile device B2 or the stationary ordering device C2, which may include the kiosk C2 and the table devices T1 and T2. At step S502, order information with respect to the placed order is sent to the POS system B4 via the network. The order information may include ordered items, payment information, and related information.

At step S503, the order information is received by the POS system B4, an order ID is created and assigned to the received order information, and then the created order TD is sent to the mobile device B2 via the network (for example, by e-mail, text (SMS), or API (i.e., Application Programming Interface). At step S504, the order information and the order ID are displayed on one or both of the displays C51 and C52.

At step S505, the order ID created at step S503 is obtained by the mobile device B2. At step S506, a light ID, transmitted from the light transmitter corresponding to a designated area of the store (pick-up places), such as tables or parking spaces, is received or scanned by the mobile device B2 through visible light communication. At step S507, the light ID and the order ID are sent to the POS system B4 by the mobile device B2.

At step S508, pick-up place information linked to or associated with the received light ID is obtained by the POS system B4 from the backend system C3. More specifically, when the POS system B4 receives the light ID from the mobile device B2, the POS system B4 accesses to the table CT1 stored in the backend system C3 for obtaining pick-up place information linked to the received light ID. Alternatively, the table CT1 defining associations between light IDs, corresponding light sources, and pick-up place information (e.g., designated area of the store) may be stored in the POS system B4. In this case, the microprocessor B40 of the POS system B4 accesses to the memory B41 implemented therein for obtaining pick-up place information. At step S509, the order ID and the associated pick-up information are displayed on one or both of the displays C51 and C52. Further a customer status linked to the order ID may be updated from a not-arrived status to an arrived status as described hereinafter in more detail with Fig.15. At step S510, a completion notice is received by the POS system B4 as described above in detail.

In addition, steps S507-S509 may be repeated. For example, when a customer, who has sent the light ID associated with the table T1 and the order ID to the POS system at step S507, moves to another table T2 and receives another light ID associated with the table T2, the mobile device B2 may further transmit the light ID associated with table T2 and its order ID. After that, the pick-up place information corresponding to the table T2 is obtained and the updated pick-up place information (i.e., table T2) is displayed instead of the old one (i.e., table T1).

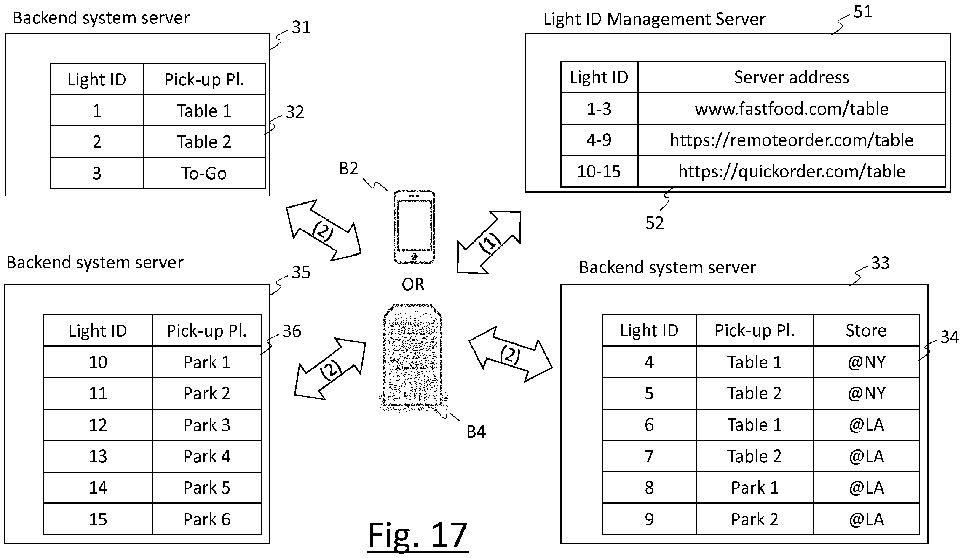

Fig. 17 shows an exemplary schematic of a light ID management system with backend systems, according to an aspect of the present disclosure.

As shown Fig. 17, the mobile device B2, the POS system B4 or a combination thereof may access a light ID management server 51 and/or backend system servers 31, 33 and 35 to obtain pick-up place information (e.g., table number/location or parking spot number/location). The light ID management server 51 stores a table 52 which defines associations or relations between light IDs and server addresses (e.g., URL). A first server address corresponding to light IDs 1-3 in the table 52 may indicate an address of the backend system server 31. A second server address corresponding to light IDs 4-9 in the table 52 may indicate an address of the backend system server 33. A third server address corresponding to light IDs 10-15 in the table 52 may indicate an address of the backend system server 35. The backend system server 31 stores a table 32 which defines associations or relations between light IDs and pick-up places. The backend system server 33 stores a table 34 which defines associations or relations between light IDs, pick-up places and stores. The table 34 indicates that there are two stores located in New York and Los Angeles. The backend system server 35 stores a table 36 which defines association or relations between light IDs and pick-up places.

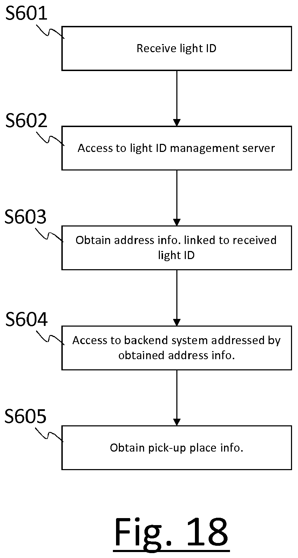

Fig. 18 shows an exemplary flowchart of a remote order system using light-IDs, according to an aspect of the present disclosure.

A flowchart, to obtain pick-up place information, shown in Fig. 18 may be conducted by a pick-up place receiver. The pick-up place receiver may include the mobile device B2, POS system B4, another device or a combination thereof.

At step S601, a light ID is received by the pick-up place receiver. The pick-up place receiver may obtain the light ID via a visible light communication by using an image sensor. Alternatively, the pick-up place receiver may receive the light ID transmitted from another device via the network. At step S602, the light ID management server 51 is accessed by the pick-up place receiver. Then at step S603, a server address information corresponding to the obtained light ID at step S601 is obtained by the pick-up place receiver. At step S604, one of backend systems is accessed by the pick-up place receiver with the server address information obtained at S603. Then at step S605, the pick-up place information, corresponding to the light ID obtained at step S601, is obtained by the pick-up place receiver.

While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present specification describes components and functions that may be implemented in particular embodiments with reference to particular standards and protocols, the disclosure is not limited to such standards and protocols.

The illustrations of the embodiments described herein are intended to provide a general understanding of the structure of the various embodiments. The illustrations are not intended to serve as a complete description of all of the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

As described above, according to an aspect of the present disclosure, a system for delivering a remote order is provided. The system includes a light transmitter that transmits, to an ordering device, a light-ID, and a server that receives, from the ordering device via a network, a remote order and the light-ID, assigns an order-ID to the remote order received, and outputs order information including at least the order-ID and a designated location of a store premise associated with the light-ID.

According to another aspect of the present disclosure, the system further includes a display located at the store premise and displays the order information.

According to yet another aspect of the present disclosure, the system further includes a printer that prints out the order information on a printing medium.

According to still another aspect of the present disclosure, the server transmits, to the ordering device, the order-ID via the network when the order-ID is assigned.

According to another aspect of the present disclosure, the server receives, from the ordering device, vehicle information associated with the ordering device, and outputs the vehicle information as the order information.

According to yet another aspect of the present disclosure, the vehicle information is received from the ordering device.

According to still another aspect of the present disclosure, the vehicle information is retrieved from a memory of the server based on information of the ordering device.

According to another aspect of the present disclosure, the vehicle information include one or more of a phone number of a customer, an address of a customer, a license plate number of a customer vehicle, a state of license plate of a customer vehicle, a color of a customer vehicle, a type of a customer vehicle and a maker of a customer vehicle.

According to yet another aspect of the present disclosure, the server transmits, via the network and to the ordering device, a receipt of the remote order, and the receipt includes at least the order-ID and price information of the remote order.

According to still another aspect of the present disclosure, the server receives, from the ordering device via the network, a completion notice indicating that the remote order has been delivered, and transmits the receipt, to the ordering device, when the completion notice is received.

According to another aspect of the present disclosure, the server stores association information between the light-ID, the light transmitter, and the designated location of a store premise.

According to yet another aspect of the present disclosure, the light transmitter transmits light in a predetermined pattern corresponding to the light-ID.

According to still another aspect of the present disclosure, the ordering device transmits its location information, and the server schedules the remote order to be prepared in view of the location information.

According to another aspect of the present disclosure, the system further includes a sensor configured to sense presence of the ordering device, in which the light transmitter transmits the light-ID in response to the sensed presence.

According to yet another aspect of the present disclosure, the designated location of the store premise is a specific parking space.

According to still another aspect of the present disclosure, the designated location of the store premise is a specific table.

According to an aspect of the present disclosure, the ordering device is a vehicle.

According to an aspect of the present disclosure, the ordering device is a stationary ordering device, the stationary ordering device including at least a kiosk and a table device.

According to an aspect of the present disclosure, a method for fulfilling a remote order includes transmitting, by a light transmitter, a light-ID to an ordering device having an image sensor; receiving, by a receiver via a network, a remote order and the light-ID from the ordering device; assigning, by a processor, an order-ID to the received remote order; and outputting order information including at least the order-ID and a designated location of a store premise associated with the light-ID.

The Abstract of the Disclosure is provided to comply with 37 C.F.R. §1.72(b) and is submitted with the understanding that it will not be used to interpret or limit the scope or meaning of the claims.

In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The preceding description of the disclosed embodiments is provided to enable any person skilled in the art to make or use the present disclosure. As such, the above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A system for delivering a remote order, the system comprising:
a light transmitter configured to transmit, to an ordering device, a light-ID; and
a server configured to
receive, from the ordering device via a network, a remote order and the light-ID,
assign an order-ID to the remote order received, and
output order information including at least the order-ID and a designated location of a store premise associated with the light-ID.

2. The system according to claim 1, further comprising:
a display located at the store premise and configured to display the order information.

3. The system according to claim 1, further comprising:
a printer configured to print out the order information on a printing medium.

4. The system according to claim 1, wherein
the server transmits, to the ordering device, the order-ID via the network when the order-ID is assigned.

5. The system according to claim 1, wherein
the server receives, from the ordering device, vehicle information associated with the ordering device, and outputs the vehicle information as the order information.

6. The system according to claim 5, wherein
the vehicle information is received from the ordering device.

7. The system according to claim 5, wherein
the vehicle information is retrieved from a memory of the server based on information of the ordering device.

8. The system according to claim 5, wherein
the vehicle information include one or more of a phone number of a customer, an address of a customer, a license plate number of a customer vehicle, a state of license plate of a customer vehicle, a color of a customer vehicle, a type of a customer vehicle and a maker of a customer vehicle.

9. The system according to claim 1, wherein
the server transmits, via the network and to the ordering device, a receipt of the remote order, and
the receipt includes at least the order-ID and price information of the remote order.

10. The system according to claim 9, wherein
the server receives, from the ordering device via the network, a completion notice indicating that the remote order has been delivered, and transmits the receipt, to the ordering device, when the completion notice is received.

11. The system according to claim 1, wherein
the server stores association information between the light-ID, the light transmitter, and the designated location of a store premise.

12. The system according to claim 1, wherein
the light transmitter transmits light in a predetermined pattern corresponding to the light-ID.

13. The system according to claim 1, wherein
the ordering device transmits its location information, and the server schedules the remote order to be prepared in view of the location information.

14. The system according to claim 1, further comprising:
a sensor configured to sense presence of the ordering device,
wherein
the light transmitter transmits the light-ID in response to the sensed presence.

15. A method for fulfilling a remote order, the method comprising:
transmitting, by a light transmitter, a light-ID to an ordering device having an image sensor;
receiving, by a receiver via a network, a remote order and the light-ID from the ordering device;
assigning, by a processor, an order-ID to the received remote order; and
outputting order information including at least the order-ID and a designated location of a store premise associated with the light-ID.
